# EUROPÄISCHE PATENTSCHRIFT

(11) **EP 3 408 339 B1**
(45) Veröffentlichungstag und Bekanntmachung des Hinweises auf die Patenterteilung: **17.06.2020**
(21) Anmeldenummer: 16823265.0
(22) Anmeldetag: 20.12.2016
(51) Int. Cl.: C09D 175/00

(54) **PRESSMANTEL UND VERFAHREN ZUR HERSTELLUNG EINES SOLCHEN**
PRESS JACKET AND METHOD FOR THE PRODUCTION THEREOF
CHEMISE DE PRESSE ET PROCÉDÉ DE FABRICATION ASSOCIÉ

(30) Priorität: 29.01.2016 DE 102016201344
(43) Veröffentlichungstag der Anmeldung: 05.12.2018
(73) Patentinhaber: Voith Patent GmbH, 89522 Heidenheim (DE)
(72) Erfinder: DELMAS, Delphine, 89522 Heidenheim (DE); REICHERT, Hermann, 89522 Heidenheim/Oggenhausen (DE); MATUSCHCZYK, Uwe, 73312 Geislingen (DE); WOKUREK , Michael, 1100 Wien (AT)
(74) Vertreter: Voith Patent GmbH - Patentabteilung
(86) Internationale Anmeldenummer: PCT/EP2016/081882
(87) Internationale Veröffentlichungsnummer: WO 2017/129328

(56) Entgegenhaltungen:
- WO-A1-2007/089142
- DE-A1-102004 046 508
- US-A1- 2006 093 844
- US-A1- 2007 004 895
- US-B1- 6 239 209

## Beschreibung

Die Erfindung geht aus von einem Pressmantel für eine Pressvorrichtung zur Behandlung einer Faserstoffbahn, z.B. zu deren Glättung oder Entwässerung, sowie von einem entsprechenden Verfahren zur Herstellung eines solchen Pressmantels, im Einzelnen gemäß den unabhängigen Ansprüchen.

Pressenvorrichtungen wie Schuhpressen sind seit langem Bestandteil moderner Papiermaschinen. Sie umfassen im Wesentlichen einen stationär angeordneten Schuh, welcher sich in einer Maschinenquerrichtung erstreckt und einen um den stationären Schuh umlaufenden Pressmantel. Letzter ist verformbar und nimmt im Betrieb im Wesentlichen eine rohrartige Form an. Der Schuh ist so geformt, dass er mit einer Gegenwalze einen Pressnip (Pressspalt) bildet. Der Pressnip ist durch die Anlagefläche der Gegenwalze im Schuh definiert. Der Schuh ist beweglich ausgeführt und kann an die Gegenwalze bewegt werden.

An den Pressmantel werden enorme Anforderungen in Bezug auf seine Stabilität gestellt, nämlich hinsichtlich Oberflächenhärte, Beständigkeit gegen Druck, Temperatur und Hydrolyse. Der Pressmantel ist zudem während des Betriebs starken Biegewechselbelastungen ausgesetzt. Beim Einlaufen am Schuhrand - in Drehrichtung des Pressmantels gesehen vor dem Pressnip - erfolgt zunächst eine Biegung unter einem verhältnismäßig kleinen Radius. Diese geht sofort in eine gegenläufige Biegung beim Durchlaufen des Pressnips über. Beim Auslaufen am anderen Schuhrand, also - in Drehrichtung des Pressmantels gesehen nach dem Pressnip - erfolgt wieder eine gegenläufige Biegung. Diese Verformung beim Ein- und Auslaufen wird auch als Wechselnip bezeichnet. Es ist leicht ersichtlich, dass die Neigung des Pressmantels, besonders an dieser Stelle zu brechen, durch die hohe mechanische Beanspruchung sehr groß ist. Entsprechend sind aus dem Stand der Technik viele Maßnahmen bekannt, die die Stabilität des Pressmantels erhöhen sollen.

Die Möglichkeiten sind im Wesentlichen in zwei Bereichen angesiedelt: einerseits in einer geeigneten Wahl des Materials, andererseits in Verstärkungslagen, welche in das Material des Pressmantels eingebettet oder anderweitig mit diesem verbunden sind.

Im Bereich der Materialien werden für Pressmäntel in zunehmendem Maße moderne Polymere, wie beispielsweise Polyurethane verwendet. Diese erlauben durch eine geeignete Zusammensetzung die Herstellung von Pressmänteln mit hoher Flexibilität und dabei großer Stabilität.

Bisherige aus dem Stand der Technik bekannte Polyurethane - besonders 1,4-Phenylendiisocyanat basierte Präpolymere und 1,4-Butandiol (PPDI-1,4-BDO) bzw. 1,4-Phenylendiisocyanat und 1,4-Hydroquinone bis(2-hydroxyethyl)ether (PPDI-1,4-HQEE), jeweils mit aromatischen Polyaminen vernetzt - sind jedoch bis heute nicht im Stande in jedem Einsatzfall eine für den Kunden zufriedenstellende Stabilität und Lebensdauer zu erzielen.

Die vorliegende Erfindung betrifft derartige eingangs genannte, gattungsgemäße Gegenstände.

Der Einsatz von Polyurethanen in industriellen Anwendungen ist unter anderem bekannt geworden aus:
WO 2007/089142 A1
US 2007/004895 A1
US 2006/093844 A1
DE 10 2004 046508 A1
US 6 239 209 B1.

Es ist entsprechend Aufgabe der Erfindung, einen Pressmantel und ein Verfahren zu dessen Herstellung anzugeben, welcher/welches die Nachteile des Standes der Technik vermeidet. Insbesondere liegt die Aufgabe darin, einen Pressmantel anzugeben, der eine gegenüber dem aus dem Stand der Technik bekannten Pressmänteln erhöhte Stabilität und Lebensdauer aufweist.

Die Aufgabe wird durch die Merkmale der unabhängigen Ansprüche gelöst. Besonders bevorzugte und vorteilhafte Ausführungsformen der Erfindung sind in den Unteransprüchen wiedergegeben.

Die Erfinder haben einen ungewöhnlichen Ansatz zur Verbesserung der mechanischen Eigenschaften eines solchen Pressmantels gewählt. Anstatt, wie bisher üblich, rein auf die von außen messbaren Eigenschaften des aus Polyurethan hergestellten Pressmantels abzuzielen, haben die Erfinder die Zusammenhänge auf Molekularebene betrachtet. Als Grundlage diente die Erkenntnis, dass Polyurethan zumindest in elastomerer Form Hartsegmente, die kristalline Strukturen bilden, und ungeordnete Weichsegmente umfasst. Die Hartsegmente verhindern, dass die weichen Segmente bei Dehnung des Materials aneinander vorbeigleiten. Wie gut die Hartsegmente dabei untereinander angeordnet sind, hat entscheidenden Einfluss auf die mechanischen Eigenschaften des Polyurethans. Die Erfinder sind zu der Erkenntnis gelangt, dass sich in einem Polyurethan z.B. auf Basis von PPDI und 1,4-BDO eine umso bessere Anordnung unter den Hartsegmenten erzielen lässt, je größer der 1,4-BDO-Gehalt ist. Um den 1,4-BDO-Gehalt zu erhöhen, setzten die Erfinder zunächst auf die Beigabe von aliphatischen Aminen zum Vernetzer. Dank deren höherer Basizität im Vergleich zu aromatischen Aminen konnte der Gehalt an Aminen im Vergleich zum 1,4-BDO gesenkt werden. Wie Versuche zunächst zeigten, genügte diese Maßnahme allein jedoch nicht, um eine zufriedenstellende Stabilität eines solchen Pressmantels zu erzielen. Erst die Erkenntnis, einen Teil der im Vernetzer verwendeten Amine durch Hydroxylgruppen tragende Moleküle, die nicht zu den Polyaminen gehören, wie Alkanolamine, z.B. Monoethanolamine, zu ersetzen brachte die Lösung. Denn hierdurch stehen mehr Hydroxylgruppen bei gleicher Reaktivität zur Verfügung. Die Hartsegmente rücken näher zusammen, was letztendlich zu den überragenden mechanischen Eigenschaften eines erfindungsgemäßen Polyurethans führt. Zudem hat sich überraschend gezeigt, dass dickere, monolithische Schichten beim Gießen des Polymers herstellbar sind, als dies im Vergleich zum Stand der Technik der Fall ist. Ähnlich gute Ergebnisse wurden entsprechend mit 1,4-Phenylendiisocyanat und 1,4-Hydroquinone bis(2-hydroxyethyl)ether (PPDI-1,4-HQEE) erzielt.

Im Sinne der Erfindung ist mit einer Pressvorrichtung beispielsweise eine Schuhpresse z.B. zur Entwässerung oder Behandlung wie Glättung einer Faserstoffbahn gemeint. Die Schuhpresse umfasst eine Schuhpresswalze und eine Gegenwalze, die zusammen einen Pressnip ausbilden oder begrenzen. Die Schuhpresswalze umfasst ferner einen umlaufenden Pressmantel und ein stehendes Presselement, den sogenannten Pressschuh. Letzterer stützt sich auf einem tragenden, ebenfalls stehenden Joch ab - beispielsweise über hydraulische Presselemente - und wird an den umlaufenden Pressmantel angedrückt. Der Pressmantel wird dadurch im Pressnip an die Gegenwalze gepresst. Unter dem Begriff stehend wird verstanden, dass das Presselement nicht relativ zu der Schuhpresswalze oder der Gegenwalze umläuft, sich jedoch translatorisch - auf die Gegenwalze zu und von ihr weg, bevorzugt in Radialrichtung dieser - und damit relativ zu der Gegenwalze bewegen kann. Zusätzlich zur Faserstoffbahn und dem Pressmantel können ein oder mehrere in Umfangsrichtung endlos umlaufende Pressfilze und/oder weitere endlos umlaufende Pressbänder durch den Pressnip der Schuhpresse geführt werden. Eine solche Schuhpresse kann selbstverständlich mehr als einen Pressnip umfassen.

Unter einer Faserstoffbahn im Sinne der Erfindung ist ein Gelege bzw. Gewirre von Fasern, wie Holzfasern, Kunststofffasern, Glasfasern, Kohlenstofffasern, Zusatzstoffen, Additiven oder dergleichen zu verstehen. So kann die Faserstoffbahn beispielsweise als Papier-, Karton- oder Tissuebahn ausgebildet sein. Sie kann im Wesentlichen Holzfasern umfassen, wobei geringe Mengen anderer Fasern oder auch Zusatzstoffe und Additive vorhanden sein können. Dies bleibt je nach Einsatzfall dem Fachmann überlassen.

Unter einem Pressmantel im Sinne der Erfindung ist ein Band oder ein Mantel zu verstehen, das/der wie dargestellt, zusammen mit einer Faserstoffbahn durch den Pressnip einer Schuhpresse geführt wird. Zur Entwässerung der Faserstoffbahn kann im bestimmungsgemäßen Betrieb die radial äußerste Oberfläche (Polymerschicht) des Pressmantels mit einem Pressfilz in Kontakt kommen, von dem die zu entwässernde Faserstoffbahn direkt getragen wird. Je nach Ausführungsform der Presseinrichtung kann z.B. zur Glättung dieser der Pressmantel im bestimmungsgemäßen Betrieb auch direkt mit der Faserstoffbahn in Kontakt kommen. Der Pressmantel ist dabei als ein in Umfangsrichtung um dessen Längsachse endloser, geschlossener Mantel ausgeführt. An seinen axialen Enden ist er - in Breitenrichtung gesehen (entlang der Längsachse) - offen. Damit kann der Pressmantel an diesen axialen Enden von zwei seitlichen Spannscheiben gehalten werden, um die Schuhpresswalze zu bilden. Anstatt der Führung durch die beiden seitlichen Spannscheiben kann der Pressmantel, wie es bei offenen Schuhpressen der Fall ist, über den Pressschuh und mehrere Leitwalzen geführt werden. Die Oberfläche eines solchen Pressmantels, also z.B. die radial äußerste Polymerschicht desselben kann mit Rillen und/oder Blindbohrungen versehen sein.

Der Pressmantel kann teilweise oder vollständig aus einem Polymer hergestellt sein. Als Polymer kann dabei ein gießbares, aushärtbares, bevorzugt elastomeres Polymer wie Polyurethan eingesetzt werden. Das Polymer kann folglich als Gießelastomer eingestellt sein.

Mit Polymerschicht ist eine Schicht gemeint, die ein solches gießbares, aushärtbares, bevorzugt elastomeres Polymer umfasst oder vollständig daraus hergestellt ist. Bevorzugt kann die Polymerschicht eine einteilig durch Urformen hergestellte, ausgehärtete Schicht sein. Anders ausgedrückt ist diese monolithisch urgeformt, also durch z.B. Gießen hergestellt. Der Begriff einteilig schließt auch Fälle ein, in denen die eine Schicht wiederum beim Gießen des Polymers aus mehreren Lagen gleichen Materials hergestellt wurde. Dies jedoch nur insoweit wie diese Lagen nach dem Aushärten im Wesentlichen nicht mehr sichtbar sind, sondern sich eine einzige, bevorzugt einheitliche Schicht ergibt. Selbiges gilt entsprechend für den fertigen Pressmantel.

Bei Vorsehen mehrerer Polymerschichten können diese in Radialrichtung gesehen übereinander angeordnet sein. Bevorzugt sind genau eine, zwei oder drei Polymerschichten vorgesehen. Diese können hinsichtlich ihres Polymers identisch ausgeführt sein oder hinsichtlich ihrer Härte oder Stöchiometrie variieren. Eine Gesamtdicke des fertigen Pressmantels in einem Schnitt durch die Längsachse desselben in Radialrichtung gemessen kann 5 bis 10 mm, bevorzugt 5 bis 7, besonders bevorzugt 5 bis 6 mm betragen. Gemäß der Erfindung kann bei Vorsehen einer einzigen Schicht der Pressmantel aus nur einem Guss, d.h. monolithisch hergestellt sein, sodass die einzige Schicht die eben genannte Dicke aufweist.

Ein fertiger Pressmantel im Sinne der Erfindung ist ein solcher, dessen wenigstens eine Polymerschicht ausgehärtet und abschließend bearbeitet, also für den eingangs genannten Zweck in z.B. einer Schuhpresse einsatzbereit ist. Analog ist mit fertiger Polymerschicht eine Schicht gemeint, die ausgehärtet ist.

Grundsätzlich ist es denkbar, dass der Pressmantel eine Verstärkungsstruktur aufweist. Mit dem Begriff Verstärkungsstruktur im Sinne der Erfindung ist eine Verstärkung der wenigstens einen, das Polymer enthaltenden oder aus diesem bestehenden Schicht - also der Polymerschicht - gemeint. Dabei kann die Verstärkungsstruktur vollständig in die Polymerschicht eingebettet sein, sodass die Verstärkungsstruktur nicht über die Begrenzung der Polymerschicht hinausgeht. Anders ausgedrückt übernimmt die Polymerschicht die Rolle einer Matrix, welche die Verstärkungsstruktur umgibt und infolge von Adhäsions- oder Kohäsionskräften an die Matrix bindet. Eine solche Verstärkungsstruktur kann Verstärkungsstrukturen, wie textile Liniengebilde - z. B. Garne oder Zwirne - und/oder textile Flächengebilde - wie z. B. Gewebe, Gewirke, Gestricke, Geflechte oder Gelege - umfassen und aus einem entsprechenden Ausgangsmaterial, z.B. durch Wickeln herstellbar sein. Unter Ausgangsmaterial wird jenes Material oder Halbzeug verstanden, mittels dem die Verstärkungsstruktur des erfindungsgemäßen fertigen Pressmantels hergestellt wird. Eine solche Verstärkungsstruktur kann gemäß dem erfindungsgemäßen Verfahren im oder nach dem Schritt e) in die Polymerschicht eingebettet werden.

Wenn im Sinne der Erfindung davon die Rede ist, dass der Vernetzer zumindest drei Komponenten umfasst, so sind darunter Ausführungsbeispiele zu verstehen, die genau drei, genau vier oder genau fünf oder mehr als fünf Komponenten umfasst. Gemäß der Erfindung soll der Vernetzer aus zumindest drei Komponenten hergestellt sein, nämlich: die erste Komponente aus 1,4-Butandiol oder 1,4-Hydroquinone bis(2-hydroxyethyl)ether (oder Mischungen aus diesen beiden), die zweite Komponente aus wenigstens einem aliphatischen Diamin und die dritte Komponente aus wenigstens einem Alkanolamin. Selbstverständlich können die Prozentanteile der drei, vier, fünf oder mehr Komponenten so gewählt sein, dass genau drei, vier, fünf oder mehr Komponenten vorliegen. Die Prozentanteile jeder der zumindest drei Komponenten können so gewählt werden, dass sie in ihrer Gesamtsumme nicht über 100% mol hinausgehen.

Grundsätzlich wäre es alternativ denkbar, dass zusätzlich zu den drei eben genannten Komponenten auch eine vierte Komponente (K4) hinzukommt, die einen Katalysator umfasst oder von diesem gebildet wird.

Optional wäre es auch möglich, dass der Vernetzer zusätzlich zu den eben genannten vier Komponenten auch eine weitere, fünfte Komponente (K5) aufweisen könnte. In diesem Fall würde der Vernetzer also aus genau fünf Komponenten bestehen. Diese fünfte Komponente könnte ein Polyol, bevorzugt ein langkettiges Polyol sein. Es könnte ausgewählt sein aus Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG) oder Polyhexamethylenetherglycol; Polycarbonatpolyol, Polyethercarbonatpolyol, Polybutadienepolyol, Perfluoropolyetherpolyol, Silikonpolyol oder Mischungen daraus. Bei Vorsehen eines Polyols im Vernetzer bringt dies den Vorteil, dass die Härte des fertigen Pressmantels gesenkt werden kann.

Das bereits zu genau drei Komponenten Gesagte gilt auch hier analog: Die Prozentanteile jeder der genau vier oder genau fünf Komponenten können so gewählt werden, dass sie in ihrer Gesamtsumme nicht über 100% mol hinausgehen. Anders ausgedrückt bedeutet dies, dass eben genau drei oder genau vier oder genau fünf Komponenten im Vernetzer vorhanden sind.

Mittels eines Katalysators kann die Reaktionsgeschwindigkeit der Vernetzung besser gesteuert werden, wenn ein solcher dem Vernetzer zugemischt wird. Dieser ist jedoch nicht zwingend notwendig. So wäre es grundsätzlich denkbar, auf die Komponente K4, also den Katalysator zu verzichten. In dem Falle, dass eine weitere ("fünfte") Komponente K5 vorgesehen sein sollte, würde dann der Vernetzer genau vier Komponenten umfassen, nämlich die erste K1, die zweite K2, die dritte K3 und die weitere Komponente K5. Hinsichtlich der genannten Komponenten gilt das zuvor Gesagte analog.

Unabhängig von den genannten Alternativen, also z.B. ob der Vernetzer aus genau drei, genau vier oder genau fünf oder mehr Komponenten hergestellt ist oder solche umfasst, könnte jede der genannten Komponenten ihrerseits aus weiteren Unterkomponenten bestehen. Bevorzugt jedoch sind die erfindungsgemäßen Stoffe selbst die Komponenten.

Wenn gemäß der Erfindung von "wenigstens" einer Komponente des Vernetzer gesprochen wird, dann ist damit einerseits genau eine oder mehr als eine solche, also mehrere entsprechende Komponenten gemeint.

Die erfindungsgemäßen Komponenten können z.B. gemäß dem erfindungsgemäßen Verfahren dem Vernetzer zugegeben werden, bevor sie mit dem Präpolymer reagiert werden.

Mit dem Begriff "höchstens" bezogen auf einen bestimmten Prozentsatz einer Komponente ist gemeint, dass der Anteil zumindest > 0 %, also z.B. 0,01 % oder mehr, jedoch maximal den bestimmten Prozentsatz umfasst. Ist z.B. die Rede von "höchstens 15 %", so ist damit stets das Intervall zwischen > 0 %, also z.B. größer. 0,01 % und 15 % gemeint. Somit sind in jedem Fall alle drei, vier, fünf oder mehr Komponenten gemäß der Erfindung stets und einzeln in dem Vernetzer vertreten.

Wenn im Sinne der Erfindung von aliphatischen Aminen die Rede ist, dann können darunter primäre aliphatische Amine (R-NH₂), sekundäre aliphatische Amine (R₂-NH) oder tertiäre aliphatische Amine R₃N gemeint sein. In einer bevorzugten Ausführungsform sind die aliphatischen Amine jedoch primäre aliphatische Amine, da sich hiermit die erfindungsgemäßen Vorteile am besten einstellen.

Im Sinne der Erfindung wird unter Alkanolaminen, auch Aminoalkohole genannt, eine Stoffgruppe von organischen Verbindungen verstanden, die zugleich mindestens zwei funktionelle Gruppen enthält, davon eine Hydroxygruppe und eine Aminogruppe. Gemäß einer Ausführungsform werden Alkanolamine bevorzugt, die eine primäre (-NH₂) oder sekundäre (-NHR) Aminofunktion aufweisen. Bevorzugt ist das Alkanolamin ein Monoethanolamin. Hierdurch werden die erfindungsgemäßen Vorteile besonders gut erfüllt.

Untersuchungen haben ergeben, dass die Vorteile der Erfindung bereits auch sehr gut erfüllt werden, wenn das Polyol des Präpolymers (ausschließlich) eine Mischung aus Polytetramethylenetherglycol (PTMEG) und Polycarbonatpolyol oder Polyethercarbonatpolyol ist - (PPDI-PTMEG-PC) - und die zumindest drei Komponenten K1 bis K3 des Vernetzers vorhanden sind.

Dabei kann das PTMEG des Präpolymers in einem Anteil von 0,01% bis 54 % mol, bevorzugt 44% bis 54% mol vorgesehen sein. Hierdurch lassen sich die erfindungsgemäßen Vorteile noch besser realisieren.

Es hat sich gezeigt, dass ein Pressmantel im höchsten Maße die erfindungsgemäßen Vorteile zeigt, wenn er wie folgt ausgebildet wird:
- die erste Komponente ist 1,4-BDO oder 1,4-Hydroquinone bis(2-hydroxyethyl)ether (HQEE),
- die zweite Komponente, also das aliphatische Diamin, ist Hexamethylendiamin (HMDA),
- die dritte Komponente, also das Alkanolamin, ist Monoethanolamin,
- die vierte Komponente, also der Katalysator, enthält Bismuth, wie Bismuth-Neodecanoat.

Die Erfindung betrifft auch eine Presswalze, wie Schuhpresswalze, für eine Schuhpresse zur Entwässerung einer Faserstoffbahn, wobei die Presswalze wenigstens einen erfindungsgemäßen Pressmantel aufweist.

Auch betrifft die Erfindung eine Schuhpresse zur Entwässerung einer Faserstoffbahn, bevorzugt einer Papier-, Karton-, Tissue- oder Zellstoffbahn, umfassend eine Presswalze und eine Gegenwalze, die zusammen einen Nip ausbilden oder begrenzen, wobei die Presswalze einen umlaufenden Pressmantel umfasst, wobei der Pressmantel gemäß der Erfindung ausgebildet ist.

Schließlich betrifft die Erfindung die Verwendung eines erfindungsgemäßen Pressmantels für eine Presse, wie Schuhpresse zur Entwässerung einer Faserstoffbahn, bevorzugt einer Papier-, Karton-, Tissue- oder Zellstoffbahn.

Die Erfindung wird nachfolgend unter Bezugnahme auf die Zeichnungen ohne Einschränkung der Allgemeinheit näher erläutert. In den Zeichnungen zeigen:
- Fig. 1: eine teilgeschnittene, schematische Seitenansicht einer Schuhpresse mit einem Pressmantel gemäß eines Ausführungsbeispiels der vorliegenden Erfindung.
- Fig. 2: eine schematische, teilgeschnittene und vergrößerte Darstellung eines Ausführungsbeispiels eines Pressmantels in einen Querschnitt durch dessen Längsachse gesehen;
- Fig. 3: eine stark schematisierte Darstellung der Durchführung des erfindungsgemäßen Verfahrens in einer Seitenansicht auf eine Vorrichtung zur Herstellung des Pressmantels.

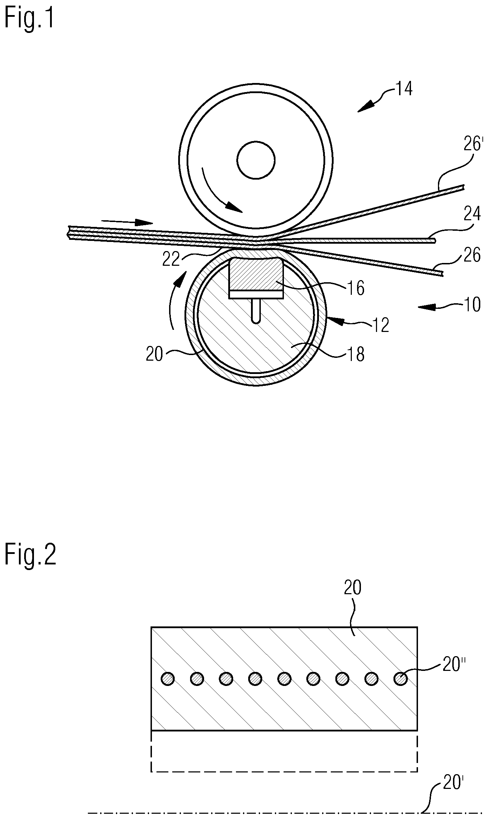

In der Fig. 1 ist eine Schuhpresse 10 dargestellt, welche vorliegend eine erfindungsgemäße Presswalze, wie Schuhpresswalze 12, und eine Gegenwalze 14 umfasst. Schuhpresswalze 12 und Gegenwalze 14 sind hinsichtlich ihrer Längsachsen parallel zueinander angeordnet. Sie bilden zusammen einen Nip 22 aus oder begrenzen einen solchen.

Während die Gegenwalze 14 hier aus einer um ihre Längsachse rotierenden zylindrisch ausgestalteten Walze besteht, ist die Schuhpresswalze 12 aus einem Schuh 16, einem diesen tragenden stehenden Joch 18 und einem Pressmantel 20 zusammengesetzt. Schuh 16 und Joch 18 sind in Bezug auf die Gegenwalze 14 bzw. den Pressmantel 20 feststehend angeordnet. Das bedeutet, sie rotieren nicht. Dabei wird der Schuh 16 durch das Joch 18 abgestützt und über nicht dargestellte, hydraulische Presselemente an den relativ dazu umlaufenden Pressmantel 20 angepresst. Der Pressmantel 20, der Schuh 16 und Joch 18 in Umfangsrichtung umgibt, dreht sich dabei um seine Längsachse im entgegengesetzten Drehsinn zu der Gegenwalze 14. Aufgrund der konkaven Ausgestaltung des Schuhs 16 an seiner der Gegenwalze 14 zugewandten Seite ergibt sich ein vergleichsweise langer Nip 22.

Die Schuhpresse 10 eignet sich insbesondere zur Entwässerung von Faserstoffbahnen 24. Bei dem Betrieb der Schuhpresse wird eine Faserstoffbahn 24 mit einem oder zwei Pressfilzen 26, 26' durch den Pressspalt 22 geführt. Im vorliegenden Fall sind es genau zwei Pressfilze 26, 26', die die Faserstoffbahn 24 sandwichartig zwischen sich aufnehmen. Beim Durchgang durch den Nip 22 wird im Nip 22 auf die Faserstoffbahn 24 durch die Pressfilze 26, 26' mittelbar ein Druck ausgeübt. Dies geschieht dadurch, dass die radial äußerste Oberfläche der Gegenwalze 14 einerseits und die radial äußerste Oberfläche des Pressmantels 20 unmittelbar mit den entsprechenden Pressfilzen 26, 26' in Kontakt kommen. Die aus der Faserstoffbahn 24 austretende Flüssigkeit wird von dem bzw. den Pressfilzen 26, 26' und etwaigen in der Pressmanteloberfläche vorgesehen Vertiefungen (nicht dargestellt) vorübergehend aufgenommen. Nach dem Verlassen des Nips 22 wird die von den Vertiefungen des Pressmantels 20 aufgenommene Flüssigkeit abgeschleudert, bevor der Pressmantel 20 erneut in den Presspalt 22 eintritt. Zudem kann das von dem Pressfilz 26, 26' aufgenommene Wasser nach dem Verlassen des Pressspalts 22 mit Saugelementen entfernt werden.

Fig. 2 zeigt in einem nicht maßstäblichen, teilweise dargestellten Querschnitt entlang der Längsachse 20' des fertigen Pressmantels 20 eine mögliche Ausführungsform der Erfindung. Zu sehen ist die (genau) eine Polymerschicht des Pressmantels 20. Wie durch die gestrichelten Linien angedeutet, wäre es denkbar, dass der Pressmantel 20 aus mehreren, radial aufeinander angeordneten Polymerschichten besteht. Z.B. wären genau zwei Polymerschichten denkbar, eine radial innere (gestrichelt dargestellte) und eine radial äußerste Polymerschicht (in ausgezogenen Linien dargestellt).

Vorliegend ist in die wenigstens einen Polymerschicht eine Verstärkungsstruktur 20" eingebettet. Dies ist durch die schraffierten Kreise, die textile Flächen- bzw. Liniengebilde wie Fasern sein können, angedeutet. Die Verstärkungsstruktur ist vollständig in die Polymerschicht eingebettet, das bedeutet, dass sich die Verstärkungsstruktur nicht über die Begrenzungen der Polymerschicht hinauserstreckt.

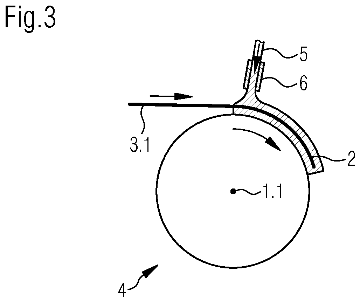

Fig. 3 zeigt in einer stark schematisierten Seitenansicht eine Vorrichtung zur Herstellung eines erfindungsgemäßen Pressmantels 20. Die Vorrichtung ist derart eingerichtet, dass sie das erfindungsgemäße Verfahren zur Herstellung des Pressmantels 20 ausübt. Die Vorrichtung weist vorliegend genau einen zylindrischen Wickeldorn 4, wobei hier auf dessen radial äußerste Mantelfläche z.B. ein Ausgangsmaterial 3.1 spiralig aufgebracht wird. Die Darstellung zeigt ein Anfangsstadium des Herstellungsverfahrens. Im vorliegenden Fall ist dazu das eine Ende des Ausgangsmaterials 3.1 auf einem Polymer, das auf dem Außenumfang des Wickeldorns 4 angeordnet ist, befestigt. Abgesehen von der gezeigten schematischen Darstellung könnte das eine Ende des Ausgangsmaterials 3.1 auch direkt, also unmittelbar auf dem Wickeldorn 4 aufliegen oder aufgebracht werden, ohne dass anfangs zwischen Ausgangsmaterial 3.1 und Wickeldorn 4 ein Polymer vorgesehen ist. Das Ausgangsmaterial 3.1 kann dabei ein textiles Flächengebilde oder Liniengebilde sein.

Der Wickeldorn 4 ist um seine Längsachse 1.1, die der Längsachse des herzustellenden Pressmantels entspricht, rotierbar gelagert. Längsachse 1.1 verläuft hier senkrecht in die Zeichenebene hinein. Über eine Leitung 5 wird durch einen Gießdüse 6 ein Gießmaterial, wie gießfähiges, aushärtbares elastomeres Polymer, z.B. Polyurethan, von oben auf die radial äußerste Mantelfläche des Wickeldorns 4 bzw. auf das Ausgangsmaterial 3.1 gegeben. Ein solches Gießmaterial kann z.B. hinsichtlich seiner Topfzeit und Viskosität derart gewählt werden, dass es beim Gießen nicht vom Wickeldorn 4 heruntertropft. Währenddessen wird der Wickeldorn 4 in Pfeilrichtung um dessen Längsachse gedreht. Gleichzeitig mit dieser Drehung wird die Gießdüse 6 über eine geeignete, in Fig. 3 nicht weiter dargestellte Führung parallel zur Längsachse 1.1 entlang dieser relativ an dem Wickeldorn 4 entlanggeführt. Gleichzeitig mit dem Aufgießen des Gießmaterials wird das Ausgangsmaterial 3.1 abgerollt und auf den sich drehenden Wickeldorn 4 zu Wendeln gewickelt. Dabei kann das Gießmaterial durch das Ausgangsmaterial 3.1 hindurch bis auf den Wickeldorn 4 gelangen. Das Polymer bildet in diesem Beispiel nach dem Schritt des Aushärtens eine erste, hier radial innerste und bevorzugt elastomere Polymerschicht 2 des Pressmantels, wovon in Fig. 3 nur ein Teil gezeigt ist.

Das aus der Gießdüse 6 austretende Gießmaterial ist ein Gemisch aus einem Reaktionsprodukt (auch Präpolymer genannt) und einem Vernetzer. Ersteres wird aus einem nicht gezeigten Reaktionsprodukt-Behälter bereitgestellt, in dem es gespeichert oder angerührt wird. Das Reaktionsprodukt kann z.B. 1,4-Phenylendiisocyanat (PPDI) und ein Polyol umfassen. In dem Reaktionsprodukt-Behälter (Präpolymer-Behälter) kann es zum Beispiel in Form eines Präpolymers aus den eben genannten Stoffen vorliegen.

Der Vernetzer kann in einem Vernetzer-Behälter bereitgestellt werden. Der Vernetzer umfasst zumindest eine erste Komponente K1 z.B. umfassend 1,4-Butandiol (BDO), eine zweite Komponente K2 umfassend wenigstens ein aliphatisches Diamin sowie eine dritte Komponente K3 umfassend wenigstens ein Alkanolamin. Er kann aber auch eine vierte oder fünfte oder weitere Komponenten umfassen. Der Vernetzer mit seinen entsprechenden Komponenten kann direkt im Vernetzer-Behälter angerührt werden. Denkbar ist, jedoch auch, dass die Vorrichtung für jede der Komponenten einen entsprechenden Einzelbehälter umfasst, der über nicht dargestellte Leitungen strömungsleitend mit dem Vernetzer-Behälter verbunden ist, um den erfindungsgemäßen Vernetzer im Vernetzer-Behälter herzustellen.

Reaktionsprodukt-Behälter und Vernetzer-Behälter sind der Vorrichtung zur Herstellung eines Pressmantels 20 zugeordnet. Sie sind über ebenfalls nicht dargestellte Leitungen strömungsleitend mit einer der Gießdüse 6 in Strömungsrichtung vorgeschalteten Mischkammer (nicht dargestellt) verbunden. Das Reaktionsprodukt-Vernetzer-Gemisch wird also stromauf und außerhalb der Gießdüse 6 hergestellt, also in der Mischkammer gemischt. Unabhängig von der Herstellung des Gemisches wird dieses dann auf die Oberfläche des Wickeldorns 4 zum Bilden der zumindest einen Polymerschicht 2 des Pressmantels 20 aufgebracht.

Mittels eines solchen kontinuierlichen Gießvorgangs wird also nach und nach über die Breite des Wickeldorns 4 ein endloser, um dessen Längsachse 1.1 in sich geschlossener zylinderrohrförmiger Pressmantel 20 hergestellt, dessen Innenumfang im Wesentlichen dem Außenumfang des Wickeldorns 4 entspricht.

Grundsätzlich wäre es denkbar das Ausgangsmaterial 3.1 auf mehr als den einen in Fig. 3 gezeigten Wickeldorn 4 zu wickeln. Beispielsweise könnten zwei Wickeldorne vorgesehen sein, die parallel hinsichtlich ihrer Längsachsen mit Abstand zueinander angeordnet sein könnten. Alternativ wäre es auch denkbar, das Polymer auch auf die radial innere Mantelfläche des Wickeldorns 4, z.B. nach Art des Schleuderns, aufzubringen.

Unabhängig von der angesprochenen Ausführungsform wird der fertige Pressmantel 20 schließlich von dem wenigstens einen Wickeldorn 4 abgenommen.

Wie in den Figuren dargestellt, ist der Pressmantel 20 gemäß der Erfindung ausgeführt. Das bedeutet, dass die Polymerschicht (teilweise oder vollständig) aus einem Polyurethan hergestellt ist. Das Polyurethan ist dabei aus einem Präpolymer, das ein Reaktionsprodukt aus PPDI und einem Polyol ist, und einem Vernetzer gebildet. Der Vernetzer umfasst die eingangs genannten Komponenten. Diese garantieren die besonders hohe Stabilität hinsichtlich der mechanischen Eigenschaften des Pressmantels 20 und führen im Betrieb zu einer verlängerten Lebensdauer desselben.

## Patentansprüche

1. Pressmantel (20) für eine Pressvorrichtung zur Behandlung einer Faserstoffbahn, umfassend wenigstens eine Polymerschicht, wobei die Polymerschicht ein Polyurethan enthält oder aus diesem hergestellt ist, wobei das Polyurethan gebildet ist aus einem Präpolymer und einem Vernetzer, und das Präpolymer ein Reaktionsprodukt aus 1,4-Phenylendiisocyanat (PPDI) und einem Polyol ist, wobei der Vernetzer die folgenden Komponenten umfasst:
eine erste Komponente (K1) umfassend 1,4-Butandiol (BDO) oder 1,4-Hydroquinone bis(2-hydroxyethyl)ether (HQEE),
eine zweite Komponente (K2) umfassend wenigstens ein aliphatisches Diamin,
eine dritte Komponente (K3) umfassend wenigstens ein Alkanolamin.

2. Pressmantel (20) nach Anspruch 1, **dadurch gekennzeichnet, dass** das Polyol ausgewählt ist aus: Polyesterpolyol, insbesondere Polycaprolactonpolyol, Polyetherpolyol, insbesondere Polytetramethylenetherglycol (PTMEG), Polypropylenglycol (PPG), Polyethylenglycol (PEG) oder Polyhexamethylenetherglycol; Polycarbonatpolyol, Polyethercarbonatpolyol, Polybutadienepolyol oder Mischungen daraus.

3. Pressmantel (20) nach Anspruch 1 oder 2, **dadurch gekennzeichnet, dass** der Vernetzer 60% mol bis 99,9% mol, bevorzugt 75% mol bis 99,9% mol der ersten Komponente (K1) enthält.

4. Pressmantel (20) nach einem der Ansprüche 1 bis 3, **dadurch gekennzeichnet, dass** die zweite Komponente (K2) ausgewählt ist aus Ethylendiamin (EDA), 2,2,4-Trimethyl-1,6-Hexandiamin, 2,4,4-Trimethyl-1,6-Hexandiamin, Hexamethylendiamin (HMDA) oder Mischungen daraus.

5. Pressmantel (20) nach einem der Ansprüche 1 bis 4, **dadurch gekennzeichnet, dass** der Vernetzer höchstens 15% mol der zweiten Komponente (K2) enthält.

6. Pressmantel (20) nach einem der Ansprüche 1 bis 5, **dadurch gekennzeichnet, dass** die dritte Komponente (K3) ausgewählt ist aus Monoethanolamin..

7. Pressmantel (20) nach einem der Ansprüche 1 bis 6, **dadurch gekennzeichnet, dass** der Vernetzer höchstens 20% mol der dritten Komponente (K3) enthält.

8. Pressmantel (20) nach einem der Ansprüche 1 bis 7, **dadurch gekennzeichnet, dass** der Vernetzer eine vierte Komponente (K4), umfassend einen Katalysator, aufweist und die vierte Komponente (K4) ausgewählt ist aus tertiären Aminen, wie 1,4-Diazabicyclo(2.2.2)octan (DABCO), Triethylendiamin (TEDA), Triethylamin, Metallverbindungen, organometallischen Verbindungen - z.B. umfassend oder enthaltend Bismuth, wie Bismuth-Neodecanoat, Quecksilber, Aluminium, Zirconium, Eisen, Kalzium, Natrium, Kalium, Blei, Zinn, Titan - oder Mischungen aus den vorgenannten Stoffen.

9. Pressmantel (20) nach einem der Ansprüche 1 bis 8, **dadurch gekennzeichnet, dass** der Vernetzer höchstens 10% mol, bevorzugt höchstens 5% mol der vierten Komponente (K4) enthält.

10. Pressmantel (20) nach einem der Ansprüche 1 bis 9, **dadurch gekennzeichnet, dass** die wenigstens eine Polymerschicht die radial äußerste Polymerschicht des Pressmantels ist.

11. Pressmantel (20) nach einem der Ansprüche 1 bis 10, **dadurch gekennzeichnet, dass** in die wenigstens eine Polymerschicht eine Verstärkungsstruktur (20") eingebettet ist.

12. Pressmantel (20) nach einem der Ansprüche 1 bis 11, **dadurch gekennzeichnet, dass** der Vernetzer eine fünfte Komponente (K5) umfasst, die bevorzugt ausgewählt ist aus: Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG) Polyhexamethylenetherglycol, Polycarbonatpolyol, Polyethercarbonatpolyol, Polybutadienepolyol, Perfluoropolyetherpolyol, Silikonpolyol oder Mischungen daraus.

13. Pressmantel (20) nach einem der Ansprüche 1 bis 12, **dadurch gekennzeichnet, dass** das Polyol des Präpolymers Polytetramethylenetherglycol (PTMEG), bevorzugt zu einem Anteil von 0,01 % bis 54 % mol, besonders bevorzugt 44% bis 54% mol, enthält.

14. Pressmantel (20) nach Anspruch 13, **dadurch gekennzeichnet, dass** das Polyol des Präpolymers zusätzlich ein Polycarbonatpolyol enthält.

15. Pressmantel (20) nach einem der Ansprüche 1 bis 12, **dadurch gekennzeichnet, dass** das Polyol des Präpolymers ausschließlich, bis auf eventuelle ungewollte Verunreinigungen, ein Polycarbonatpolyol ist.

16. Presswalze, wie Schuhpresswalze (12), für eine Schuhpresse (10) zur Behandlung einer Faserstoffbahn (24), **dadurch gekennzeichnet, dass** die Presswalze wenigstens einen Pressmantel (20) nach einem der vorstehenden Ansprüche aufweist.

17. Schuhpresse (10) zur Behandlung einer Faserstoffbahn (24), bevorzugt einer Papier-, Karton-, Tissue- oder Zellstoffbahn, umfassend eine Presswalze und eine Gegenwalze (14), die zusammen einen Nip (22) ausbilden oder begrenzen, wobei die Presswalze einen umlaufenden Pressmantel umfasst, **dadurch gekennzeichnet, dass** der Pressmantel (20) nach einem der Ansprüche 1 bis 15 ausgebildet ist.

18. Verfahren zum Herstellen eines Pressmantels (20) für eine Pressvorrichtung zur Behandlung einer Faserstoffbahn, gemäß einem der Ansprüche 1 bis 15, umfassend die folgenden Schritte:
a) Bereitstellen zumindest eines, rotierbar gelagerten Wickeldorns (4);
b) Bereitstellen eines Vernetzers, umfassend zumindest eine erste Komponente (K1) umfassend 1,4-Butandiol (BDO) oder 1,4-Hydroquinone bis(2-hydroxyethyl)ether (HQEE), eine zweite Komponente (K2) umfassend wenigstens ein aliphatisches Diamin, eine dritte Komponente (K3) umfassend wenigstens ein Alkanolamin;
c) Bereitstellen eines Reaktionsprodukts aus 1,4-Phenylendiisocyanat (PPDI) und einem Polyol, z.B. in Form eines Präpolymers;
d) Mischen des Reaktionsprodukts und des Vernetzers zum Herstellen eines Polyurethans;
e) Ausbringen des Reaktionsprodukt-Vernetzer- Gemisches auf einer Oberfläche des Wickeldorns (4) zum Bilden zumindest einer Polymerschicht (2) des Pressmantels (20);
f) Aushärten der zumindest einen Polymerschicht (2);
g) Abnehmen des so hergestellten Pressmantels (1) vom Wickeldorn (4).

19. Verwendung eines Pressmantels (20) nach einem der Ansprüche 1 bis 15 für eine Presse, wie Schuhpresse (10) zur Behandlung einer Faserstoffbahn (24), bevorzugt einer Papier-, Karton-, Tissue- oder Zellstoffbahn.

## Claims

1. Press shell (20) for a press device for the treatment of a fibrous web, comprising at least one polymer layer, where the polymer layer comprises, or has been produced from, a polyurethane, where the polyurethane is composed of a prepolymer and of a crosslinking agent, and the prepolymer is a reaction product of phenylene 1,4-diisocyanate (PPDI) and of a polyol, where the crosslinking agent comprises the following components:
a first component (K1) comprising 1,4-butanediol (BDO) or 1,4-hydroquinone bis(2-hydroxyethyl) ether (HQEE),
a second component (K2) comprising at least one aliphatic diamine,
a third component (K3) comprising at least one alkanolamine.

2. Press shell (20) according to Claim 1, **characterized in that** the polyol is selected from: polyester polyol, in particular polycaprolactone polyol, polyether polyol, in particular polytetramethylene ether glycol (PTMEG), polypropylene glycol (PPG), polyethylene glycol (PEG) or polyhexamethylene ether glycol; polycarbonate polyol, polyethercarbonate polyol, polybutadiene polyol and mixtures thereof.

3. Press shell (20) according to Claim 1 or 2, **characterized in that** the crosslinking agent comprises 60 mol% to 99.9 mol%, preferably 75 mol% to 99.9 mol%, of the first component (K1).

4. Press shell (20) according to any of Claims 1 to 3, **characterized in that** the second component (K2) is selected from ethylenediamine (EDA), 2,2,4-trimethyl-1,6-hexanediamine, 2,4,4-trimethyl-1,6-hexanediamine, hexamethylenediamine (HMDA) and mixtures thereof.

5. Press shell (20) according to any of Claims 1 to 4, **characterized in that** the crosslinking agent comprises at most 15 mol% of the second component (K2).

6. Press shell (20) according to any of Claims 1 to 5, **characterized in that** the third component (K3) is selected from monoethanolamine.

7. Press shell (20) according to any of Claims 1 to 6, **characterized in that** the crosslinking agent comprises at most 20 mol% of the third component (K3).

8. Press shell (20) according to any of Claims 1 to 7, **characterized in that** the crosslinking agent has a fourth component (K4), comprising a catalyst, and the fourth component (K4) is selected from tertiary amines, for example 1,4-diazabicyclo[2.2.2]octane (DABCO), triethylenediamine (TEDA), triethylamine, metal compounds, organometallic compounds - e.g. comprising bismuth, for example bismuth neodecanoate, mercury, aluminium, zirconium, iron, calcium, sodium, potassium, lead, tin, titanium - and mixtures of the abovementioned substances.

9. Press shell (20) according to any of Claims 1 to 8, **characterized in that** the crosslinking agent comprises at most 10 mol% of the fourth component (K4), preferably at most 5 mol%.

10. Press shell (20) according to any of Claims 1 to 9, **characterized in that** the at least one polymer layer is the radially outermost polymer layer of the press shell.

11. Press shell (20) according to any of Claims 1 to 10, **characterized in that** a reinforcement structure (20") has been embedded into the at least one polymer layer.

12. Press shell (20) according to any of Claims 1 to 11, **characterized in that** the crosslinking agent comprises a fifth component (K5) preferably selected from: polyester polyol, in particular polycaprolactone polyol, polyether polyols, in particular polytetramethylene ether glycol (PTMEG), polypropylene glycol (PPG), polyethylene glycol (PEG) or polyhexamethylene ether glycol; polycarbonate polyol, polyethercarbonate polyol, polybutadiene polyol, perfluoropolyether polyol, silicone polyol and mixtures thereof.

13. Press shell (20) according to any of Claims 1 to 12, **characterized in that** the polyol of the prepolymer preferably comprises a proportion of 0.01 mol% to 54 mol%, particularly preferably comprises 44 mol% to 54 mol%, of polytetramethylene ether glycol (PTMEG).

14. Press shell (20) according to Claims 13, **characterized in that** the polyol of the prepolymer additionally comprises a polycarbonate polyol.

15. Press shell (20) according to any of Claims 1 to 12, **characterized in that** the polyol of the prepolymer is exclusively, except for any possible undesirable impurities, a polycarbonate polyol.

16. Press roll, for example shoe press roll (12), for a shoe press (10) for the treatment of a fibrous web (24), **characterized in that** the press roll has at least one press shell (20) according to any of the preceding claims.

17. Shoe press (10) for the treatment of a fibrous web (24), preferably of a paper web, paperboard web, tissue web or pulp web, comprising a press roll and a counter-roll (14) which together form or delimit a nip (22) where the press roll comprises a press shell running around the same, **characterized in that** the press shell (20) is configured according to any of Claims 1 to 15.

18. Process for the production of a press shell (20) for a press device for the treatment of a fibrous web, according to any of Claims 1 to 15, comprising the following steps:
a) provision of at least one rotatably mounted winding mandrel (4);
b) provision of a crosslinking agent comprising at least one first component (K1) comprising 1,4-butanediol (BDO) or 1,4-hydroquinone bis(2-hydroxyethyl) ether (HQEE), a second component (K2) comprising at least one aliphatic diamine, and a third component (K3) comprising at least one alkanolamine;
c) provision of a reaction product of phenylene 1,4-diisocyanate (PPDI) and of a polyol, e.g. in the form of a prepolymer;
d) mixing of the reaction product and of the crosslinking agent to produce a polyurethane;
e) spreading of the reaction-product-crosslinking-agent mixture on a surface of the winding mandrel (4) to form at least one polymer layer (2) of the press shell (20);
f) hardening of the at least one polymer layer (2);
g) removal of the resultant press shell (1) from the winding mandrel (4).

19. Use of a press shell (20) according to any of Claims 1 to 15 for a press, for example shoe press (10) for the treatment of a fibrous web (24), preferably of a paper web, paperboard web, tissue web or pulp web.

## Revendications

1. Chemise de presse (20) pour un dispositif de presse pour le traitement d'une bande de matière fibreuse, comprenant au moins une couche de polymère, la couche de polymère contenant un polyuréthane ou étant fabriquée à partir de celui-ci, le polyuréthane étant formé à partir d'un prépolymère et d'un réticulant et le prépolymère étant un produit de réaction du diisocyanate de 1,4-phénylène (PPDI) et d'un polyol, le réticulant comprenant les composants suivants :
- un premier composant (K1) comprenant du 1,4-butanediol (BDO) ou du 1,4-hydroquinone-bis(2-hydroxyéthyl)éther (HQEE),
- un deuxième composant (K2) comprenant au moins une diamine aliphatique,
- un troisième composant (K3) comprenant au moins une alcanolamine.

2. Chemise de presse (20) selon la revendication 1, **caractérisée en ce que** le polyol est choisi parmi : un polyester-polyol, en particulier un polycaprolactone-polyol, un polyéther-polyol, en particulier un polytétraméthylène-étherglycol (PTMEG), un polypropylèneglycol (PPG), un polyéthylèneglycol (PEG) ou un polyhexaméthylène-étherglycol ; un polycarbonate-polyol, un polyéthercarbonate-polyol, un polybutadiène-polyol ou leurs mélanges.

3. Chemise de presse (20) selon la revendication 1 ou 2, **caractérisée en ce que** le réticulant comprend 60% en mole à 99,9% en mole, de préférence 75% en mole à 99,9% en mole, du premier composant (K1)

4. Chemise de presse (20) selon l'une quelconque des revendications 1 à 3, **caractérisée en ce que** le deuxième composant (K2) est choisi parmi l'éthylènediamine (EDA), la 2,2,4-triméthyl-1,6-hexanediamine, la 2,4,4-triméthyl-1,6-hexanediamine, l'hexaméthylènediamine (HMDA) ou leurs mélanges.

5. Chemise de presse (20) selon l'une quelconque des revendications 1 à 4, **caractérisée en ce que** le réticulant contient au plus 15% en mole du deuxième composant (K2).

6. Chemise de presse (20) selon l'une quelconque des revendications 1 à 5, **caractérisée en ce que** le troisième composant (K3) est choisi parmi une monoéthanolamine.

7. Chemise de presse (20) selon l'une quelconque des revendications 1 à 6, **caractérisée en ce que** le réticulant contient au plus 20% en mole du troisième composant (K3).

8. Chemise de presse (20) selon l'une quelconque des revendications 1 à 7, **caractérisée en ce que** le réticulant présente un quatrième composant (K4), comprenant un catalyseur, et le quatrième composant (K4) est choisi parmi les amines tertiaires, telles que le 1,4-diazabicyclo(2.2.2)octane (DABCO), la triéthylènediamine (TEDA), la triéthylamine, les composés métalliques, les composés organométalliques - par exemple comprenant ou contenant du bismuth, tels que le néodécanoate de bismuth, du mercure, de l'aluminium, du zirconium, du fer, du calcium, du sodium, du potassium, du plomb, de l'étain, du titane - ou les mélanges des substances susmentionnées.

9. Chemise de presse (20) selon l'une quelconque des revendications 1 à 8, **caractérisée en ce que** le réticulant contient au plus 10% en mole, de préférence au plus 5% en mole, du quatrième composant (K4).

10. Chemise de presse (20) selon l'une quelconque des revendications 1 à 9, **caractérisée en ce que** ladite au moins une couche de polymère est la couche de polymère radialement la plus externe de la chemise de presse.

11. Chemise de presse (20) selon l'une quelconque des revendications 1 à 10, **caractérisée en ce qu'**une structure de renforcement (20") est incorporée dans ladite au moins une couche de polymère.

12. Chemise de presse (20) selon l'une quelconque des revendications 1 à 11, **caractérisée en ce que** le réticulant comprend un cinquième composant (K5), de préférence choisi parmi : un polyester-polyol, en particulier un polycaprolactone-polyol ; les polyéther-polyols, en particulier un polytétraméthylène-étherglycol (PTMEG), un polypropylèneglycol (PPG), un polyéthylèneglycol (PEG) un polyhexaméthylène-étherglycol, un polycarbonate-polyol, un polyéthercarbonate-polyol, un polybutadiène-polyol, un perfluoropolyéther-polyol, un silicone-polyol ou leurs mélanges.

13. Chemise de presse (20) selon l'une quelconque des revendications 1 à 12, **caractérisée en ce que** le polyol du prépolymère contient du polytétraméthylène-étherglycol (PTMEG), de préférence en une proportion de 0,01% à 54% en mole, de manière particulièrement préférée de 44% à 54% en mole.

14. Chemise de presse (20) selon la revendication 13, **caractérisée en ce que** le polyol du prépolymère contient en outre un polycarbonate-polyol.

15. Chemise de presse (20) selon l'une quelconque des revendications 1 à 12, **caractérisée en ce que** le polyol du prépolymère est exclusivement, aux éventuelles impuretés non souhaitées près, un polycarbonate-polyol

16. Cylindre de presse, tel qu'un cylindre de presse à sabot (12) pour une presse à sabot (10) pour le traitement d'une bande de matière fibreuse (24), **caractérisé en ce que** le cylindre de presse présente au moins une chemise de presse (20) selon l'une quelconque des revendications précédentes.

17. Presse à sabot (10) pour le traitement d'une bande de matière fibreuse (24), de préférence une bande de papier, de carton, de papier-mouchoir ou de cellulose, comprenant un cylindre de presse et un contre-cylindre (14), qui forment ou délimitent ensemble un pinçage (22), le cylindre de presse comprenant une chemise de presse périphérique, **caractérisée en ce que** la chemise de presse (20) est formée selon l'une quelconque des revendications 1 à 15.

18. Procédé pour la fabrication d'une chemise de presse (20) pour un dispositif de presse pour le traitement d'une bande de matière fibreuse selon l'une quelconque des revendications 1 à 15, comprenant les étapes suivantes :
a) mise à disposition d'au moins un mandrin d'enroulement (4), logé rotatif ;
b) mise à disposition d'un réticulant, comprenant au moins un premier composant (K1) comprenant du 1,4-butanediol (BDO) ou du 1,4-hydroquinone-bis(2-hydroxyéthyl)éther (HQEE), un deuxième composant (K2) comprenant au moins une diamine aliphatique, un troisième composant (K3) comprenant au moins une alcanolamine ;
c) mise à disposition d'un produit de réaction de diisocyanate de 1,4-phénylène (PPDI) et d'un polyol, par exemple sous forme d'un prépolymère ;
d) mélange du produit de réaction et du réticulant pour préparer un polyuréthane ;
e) application du mélange produit de réaction-réticulant sur une surface du mandrin d'enroulement (4) pour former au moins une couche de polymère (2) de la chemise de presse (20) ;
f) durcissement de ladite au moins une couche de polymère (2) ;
g) prélèvement de la chemise de presse (1) ainsi fabriquée du mandrin d'enroulement (4).

19. Utilisation d'une chemise de presse (20) selon l'une quelconque des revendications 1 à 15, pour une presse, telle qu'une presse à sabot (10), pour le traitement d'une bande de matière fibreuse (24), de préférence une bande de papier, de carton, de papier-mouchoir ou de cellulose.
